# EUROPEAN PATENT SPECIFICATION

(11) **EP 4 599 514 B1**
(45) Date of publication and mention of the grant of the patent: **19.08.2026**
(21) Application number: 23789352.4
(22) Date of filing: 02.10.2023
(51) Int. Cl.: H02K 1/2753, H02K 1/278, H02K 1/2783, H02K 1/2791, H02K 1/2792

(54) **ROTOR FOR AN ELECTRICAL MACHINE**
ROTOR FÜR EINE ELEKTRISCHE MASCHINE
ROTOR POUR MACHINE ELECTRIQUE

(30) Priority: 04.10.2022 GB 202214612
(43) Date of publication of application: 13.08.2025
(73) Proprietor: Safran Electrical & Power, Pitstone, Buckinghamshire LU7 9GT (GB)
(72) Inventor: FLOWER, Paul David, Pitstone, Buckinghamshire LU7 9GT (GB); SHARP, Michael, Pitstone, Buckinghamshire LU7 9GT (GB)
(74) Representative: Palmer, Benjamin Jeffrey
(86) International application number: PCT/GB2023/052537
(87) International publication number: WO 2024/074810

(56) References cited:
- EP-A1- 3 672 038
- JP-A- 2006 320 109
- JP-A- 2007 014 110
- JP-A- 2010 063 201
- JP-B2- 5 762 105
- US-A1- 2014 084 731
- US-A1- 2018 287 443
- US-A1- 2022 149 683
- US-A1- 2022 200 408

## Description

### TECHNICAL FIELD

The present invention relates to a rotor for an electrical machine, such as a generator of an aircraft engine. The present invention also relates to a method for manufacturing a rotor for an electrical machine, and to an electrical machine for a generator of an aircraft.

### BACKGROUND

An electrical machine, either a motor or a generator, generally comprises a rotor configured to rotate on a shaft relative to a stationary stator. The rotor and the stator also comprise an air gap therebetween. The interaction of the magnetic fields of the respective assemblies generates an induced electromotive force (EMF) and/or electrical current. In a permanent magnet electrical machine, such as a permanent magnet generator, the rotor's magnetic field is produced by permanent magnets, which, in the case of a generator, induces an AC voltage in the stator windings as they pass through the moving magnetic field of the permanent magnets.

As will be understood by a person skilled in the design of electrical machines, permanent magnet rotors often include a structural member, such as a rotor body, defining a curved support surface extending around the rotational axis of the rotor, and a plurality of magnets mounted on the curved support surface and arranged in an array around the rotational axis of the rotor. Iron losses such as eddy currents induced in magnetic parts of the machine can cause inefficiencies due to electrical resistance and related heat losses, for example.

US2014/084731A1 relates to a permanent magnet type electric rotating machine and manufacturing method thereof. EP3672038A1 relates to a permanent magnet rotor and its manufacturing method. JP5762105B2 relates to a permanent magnet type rotary electric apparatus and method for manufacturing the same. JP2006320109A relates to a rotating electric machine and manufacturing method thereof. US2022/200408A1 relates to a rotating electric machine. US2018/287443A1 relates to a rotating electric machine.

### SUMMARY OF THE INVENTION

The arrangement of the polarity of the permanent magnets of a rotor can influence how flux interacts with the associated stator. In some arrangements of rotor, the magnetic requirements of the magnets may differ, for example where the plurality of magnets comprises a first set of magnets of one type and/or orientation and a second set of magnets of another type and/or orientation.

According to a first aspect of the invention, there is provided a rotor for an electrical machine as defined in claim 1, the rotor comprising:
a structural member having a curved support surface which extends around a rotational axis of the rotor;
a plurality of magnets disposed on the curved support surface and arranged in an array around the rotational axis of the rotor, the array comprising:
   a plurality of first magnets having a first radial size; and
   a plurality of second magnets having a second radial size which is greater than the first radial size; and
a plurality of spacers disposed between the curved support surface and at least some of the plurality of magnets, wherein the plurality of spacers comprises a plurality of first spacers disposed between the curved support surface and a radial end face of each of the plurality of first magnets to space the plurality of first magnets from the curved support surface in a radial direction.

With this arrangement, the spacers can compensate for the differently sized magnets, allowing different sizes of magnet to be used more easily than with existing arrangements. In known arrangements, to avoid inconsistent spacing between the rotor and the stator across the air gap, typically either the same size of magnet is used, even if this results in one set of magnets being oversized for that application - resulting in unnecessary cost and weight - or a series of slots are machined into the curved support surface of the structural member to allow larger magnets to be recessed partially into the support surface to compensate for their larger size. With the present arrangement, no such machining step is required. Instead, the spacers allow for the use of smaller magnets, where appropriate, which reduces the amount of magnetic material overall. As a result, a cheaper and more lightweight rotor can be formed. The provision of the spacers can also allow a greater extent of size difference between first and second magnet types than known arrangements, in which the size difference is constrained by the extent to which material can be removed from the structural member to accommodate the larger magnets. The spacers may be in direct contact with one or both of the curved support surface and the plurality of magnets or in indirect contact via one or more intermediate components.

The plurality of spacers further comprises a plurality of second spacers disposed between the curved support surface and a radial end face of each of the plurality of second magnets. The plurality of first spacers each have a first radial thickness and the plurality of second spacers each have a second radial thickness which is less than the first radial thickness.

The plurality of first and second spacers are preferably sized such that the array defined by the plurality of magnets has a substantially uniform diameter. Preferably, the difference between the first and second radial thicknesses of the first and second spacers is substantially the same as the difference between the first and second radial sizes of the first and second magnets. Where the magnets are located radially outward of the structural member, the array may have a substantially uniform outer diameter. Where the magnets are located radially inward of the structural member, the array may have a substantially uniform inner diameter. As used here, the term "substantially uniform diameter" means that the diameter defined by the plurality of magnets at the opposite radial end to the structural member varies by less than 10 percent around the circumference of the array, preferably by less than 5 percent, more preferably by less than 2 percent. This minimises variations in the size of the air gap and variations in flux across the air gap.

This configuration is particularly advantageous when an annular rotor sleeve is to be applied to the final rotor assembly, since it can provide the rotor sleeve with more even distributions of stress.

One or more of the magnets may have a curved radial end face. In such embodiments, the spacers may be curved on one or both radial faces. The plurality of spacers are shaped to conform to both the curved support surface of the structural member and the radial end face of each of the plurality of magnets, wherein the radial end face of at least some of the plurality of magnets is flat.

Magnets with a flat or tapered radial end face, can be easier to manufacture than curve-ended magnets but can often necessitate additional machining of the structural member to provide a flat interface against which a flat-ended magnet can abut. Providing spacers therebetween which conform to the curved support surface and to a flat-ended magnet can simplify manufacture and assembly of the rotor, since it reduces or removes the need to machine the support surface or manufacture magnets with curved faces which closely match the curvature of the support surface.

The plurality of spacers may be provided as part of the same unitary structure. One or more of the plurality of spacers may be defined by a castellated sheet which is wrapped around the curved support surface in a circumferential direction.

With this arrangement, the plurality of spacers can be handled together as one and assembled onto the rotor in a single step. This can expedite manufacture.

Alternatively, the plurality of spacers may comprise a plurality of discrete spacer strips which form a discontinuous array of spacer elements around the rotational axis of the rotor.

One or more of the plurality of discrete spacer strips may be associated with multiple magnets. That is, one or more of the plurality of discrete spacer strips may be adjacent to multiple magnets. In this way, one or more of the plurality of discrete spacer strips may be adjacent to, or abut, two or more magnets. In such embodiments, the discrete spacer strips are provided as segments around the circumference of the rotor, whereby the number of segments is less than the number of magnets. One or more of the plurality of discrete spacer strips may be adjacent to only a single magnet. In this manner, each individual magnet may be handled during assembly with a discrete spacer strip fixed to its radial end face. Explained with reference to a method according to a further aspect of the invention, the magnets may be protected during handling in this manner.

The first and second spacers may be formed from the same material composition. In certain embodiments, the plurality of first spacers are formed from a first material composition and the plurality of second spacers are formed from a second material composition which is different to the first material composition. With this arrangement, the material characteristics can be selected independently as desired. In some embodiments, the first and second spacers may be formed from the same material with different amounts or types of pigmentation. This can enable the first and second spacers to be more easily differentiated from each other, reducing the risk of misplacement during assembly. This may be particularly beneficial if the size difference between the first and second spacers is not easily observable by eye.

The plurality of spacers may extend along only part of the axial extent of the plurality of magnets. For example, multiple spacers may be spaced apart along the axial direction of a given magnet. The plurality of spacers may extend along the entire axial extent of the plurality of magnets.

The plurality of spacers may comprise radially extending projections adjacent to the axial ends of the plurality of magnets to restrain movement of the magnets in the axial direction. The radially extending projections may form end caps on the axial ends of the plurality of magnets.

In this manner, the axial position of the magnets can be maintained during assembly by the spacers themselves, without the need for additional jigs or retaining components. Additionally, during manufacture, the axial end faces of the magnets may be at least partly covered by the spacers and thus protected during handling.

The rotor may further comprise a plurality of soft magnetic elements between the magnets and the structural member. The soft magnetic elements can favourably alter the flux characteristics of the rotor. The soft magnetic elements may be positioned between the spacers and the magnets. In certain embodiments, the rotor may further comprise a plurality of soft magnetic elements embedded in the plurality of spacers. With such an arrangement, the soft magnetic elements do not need to be handled separately to the spacers. This can also reduce the risk of dislodgement of the soft magnetic elements during or after assembly.

The plurality of spacers may be formed from a polymer. Suitable polymers include polyetheretherketone (PEEK), polytetrafluoroethylene (PTFE), polyetherketone (PEK), polyphenylene sulfide (PPS), polyamide-imide (PAI), or any other appropriate polymer. The plurality of spacers may comprise a soft magnet composite (SMC) material. A 'soft magnetic composite' can be defined as a material comprising a ferromagnetic particulate material. The particles can be interspersed in an electrically insulating material. The average particle size may be less than 100 µm. The material can have a powdered or powder-like particle size and distribution. Unlike grains or adjacent particles which may be found within a single ferromagnetic sheet or layer, the particles of the soft magnetic composite in the intermediate layer may be substantially electrically insulated from one another. In this way, the maximum dimension across which eddy currents may be induced is significantly reduced as compared to those in laminated components. In particular, eddy currents in the rotor can be significantly reduced by reducing the maximum geometric extent of any single conductive portion of ferromagnetic material. In a soft magnetic composite, the maximum uninterrupted extent of conductive ferromagnetic material is limited by the particle size. In some embodiments, the plurality of spacers may comprise both SMC and a polymer. In these embodiments, the polymer may improve the material characteristics of the spacers.

The plurality of magnets may be arranged in any suitable array. For example, the permanent magnets may be arranged in a Halbach array, or a Halbach-type array. With Halbach arrays, a magnetic field is produced with adjacent permanent magnets arranged with an orientation change relative to one another. This can be performed with 90° orientation change between adjacent permanent magnets. In such arrangements, the magnetic field on one side of the array may be augmented or enhanced while the opposite side exhibits a reduction of the magnetic field a negligible amount of flux. In a rotor, the magnetic field may be amplified in one radial direction relative to the rotor, while being reduced in the opposite radial direction relative to the rotor. In a Halbach-type array, for example, there may be any appropriate discrete angle of orientation change between magnets. It will be understood that a Halbach-type array is one in which adjacent magnets in the array are rotated in a specific sequence of orientations, which results in the magnetic fields of the magnets comprising the array to combine in ways that enhance the resulting magnetic field on one side of the array, while minimizing the magnet field on the other side. A Halbach-type array may therefore achieve a comparable effect to a Halbach array, despite configurations which may differ from the strict definition of a Halbach array.

The plurality of magnets may be arranged in a Halbach array. Halbach arrays create a stronger field in one radial direction while reducing the field in the opposite radial direction to near zero. Such a configuration therefore advantageously directs the flux towards the stator, minimising leakage of flux in the opposite direction and improving the overall electromagnetic performance of the electrical machine. Halbach arrays, which can be either linear or arranged around cylindrical geometries, are typically produced using curved or tapered wedge shape magnets. Manufacturing curved or tapered wedge shape magnets can be more expensive. When using a Halbach array, the optimal size of magnets in different orientations varies. The present invention has been found to be particularly beneficial for rotors with magnets arranged in a Halbach array, since the magnets can be sized according to their optimal dimensions without the need to machine the structural member of the rotor to create recesses for the accommodation of the larger magnets within the same structure. In high pole count machines, the number of slots required can be greater, increasing the expense and duration of manufacture. The present invention also enables flat ended magnets to be used without the need to modify the curved support surface of the structural member.

According to a second aspect of the invention, there is provided an electrical machine for use in a generator of an aircraft, comprising: a stator; and a rotor according to the first aspect of the present invention.

According to a third aspect of the invention, there is provided a method for forming a rotor of an electrical machine, comprising the steps of:
providing a structural member having a curved support surface which extends around a rotational axis of the rotor;
arranging a plurality of magnets on the curved support surface in an array around the rotational axis of the rotor, the array comprising a plurality of first magnets having a first radial size and a plurality of second magnets having a second radial size which is greater than the first radial size; and
positioning a plurality of spacers between the curved support surface and at least some of the plurality of magnets by positioning a plurality of first spacers between the curved support surface and a radial end face of the plurality of first magnets to space the plurality of first magnets from the curved support surface in a radial direction.

The step of positioning a plurality of spacers between the curved support surface and at least some of the plurality of magnets further comprises positioning a plurality of second spacers, each adjacent to the radial end face of one of the plurality of second magnets. The plurality of first spacers each have a first radial thickness and the plurality of second spacers each have a second radial thickness which is less than the first radial thickness.

The step of positioning a plurality of spacers between the curved support surface and the plurality of magnets may be carried out by positioning the plurality of spacers on the curved support surface before subsequently positioning the plurality of magnets on the plurality of spacers to arrange the plurality of magnets on the curved support surface in an array. In certain embodiments, the plurality of magnets may be fixed to the plurality of spacers prior to positioning the plurality of magnets and the plurality of spacers together on the curved support surface. The plurality of magnets may be fixed to the plurality of spacers in any suitable manner. For example, using an adhesive such as a contact adhesive.

The plurality of spacers may be formed on one or more corrugated sheets. The corrugate sheet forms a unitary structure by which the plurality of spacers is defined. In such embodiments, the step of positioning a plurality of spacers may be carried out by wrapping the castellated sheet around the curved support surface in a circumferential direction and subsequently fixing the plurality of magnets to the castellated sheet. Alternatively, the plurality of spacers may comprise a plurality of discrete spacer strips, each of which is fixed to one of the plurality of magnets before mounting on the curved support surface.

By fixing the magnets to the spacers prior to mounting both together on the curved support surface, the spacers can provide protection to the magnets during assembly. Magnets can be fragile and may be susceptible to cracking during handling. The spacer strips can provide a physical buffer when the magnets are being handled to reduce the risk of magnet damage.

The plurality of spacers may be planar. The plurality of spacers may comprise one or more radially extending projections at one or both axial ends. The radially extending projections may restrain any movement of the magnets in the axial direction and better maintain the positioning of the magnets during assembly or otherwise improve the ease of assembly or the need for additional jigs.

Each magnet may be a unitary body. The plurality of magnets may each comprise a plurality of laminate sheets. The laminate sheets may be stacked in situ on the plurality of spacers to form the plurality of magnets.

In this way, the spacers provide a base upon which the magnets may be formed. Once the magnets are formed, this advantageously provides protection to the magnets during handling without requiring the subsequent fixing of the magnets, without any reinforcement, to the spacers.

The plurality spacers may be formed from a polymer.

The plurality of spacers may be formed by injection moulding. The plurality of spacers may otherwise be formed by extrusion, rotational moulding, thermoforming, or any other appropriate form of moulding or additive manufacturing.

Such methods provide repeatable processes for the mass production of the spacers, which in turn can yield more predictable mechanical properties and reduced costs. This is particularly desirable in high pole count electrical machines, in which a large number of spacer strips may be required.

The method may further comprise the step of disposing a plurality of soft magnetic elements between the plurality of magnets and the plurality of spacers. The soft magnetic elements may be provided as one or more layers of soft magnetic material provided between the plurality of magnets and the plurality of spacers. The plurality of soft magnetic elements may be embedded within the plurality of spacers during the process of forming the spacers.

The method of the invention may further comprise providing any of the features of the product as described above, or in the following description.

### BRIEF DESCRIPTION OF THE DRAWINGS

Further features and advantages of the present invention will be further described below, by way of example only, with reference to the accompanying drawings in which:
FIGURE 1 shows a perspective sectional view of a rotor according to a first aspect of the present invention;
FIGURE 2 shows an enlarged sectional view of part of the rotor of FIGURE 1;
FIGURE 3 shows an exploded view of the rotor of FIGURE 1;
FIGURE 4 shows a cross sectional view of a discrete spacer strip;
FIGURE 5 shows a perspective view of a magnet and an associated spacer strip during assembly;
FIGURE 6 shows a block diagram illustrating an electrical machine according to a yet further aspect of the present invention;
FIGURE 7 shows an enlarged sectional view of an alternative rotor; and
FIGURE 8 shows a flow chart showing the method according to a further aspect of the present invention.

### DETAILED DESCRIPTION

The disclosure herein provides improvements in the assembly of electrical machines. Specifically, the disclosure herein relates to an improved rotor body and methods of manufacturing the same for which electromagnetic performance can be enhanced, weight can be reduced.

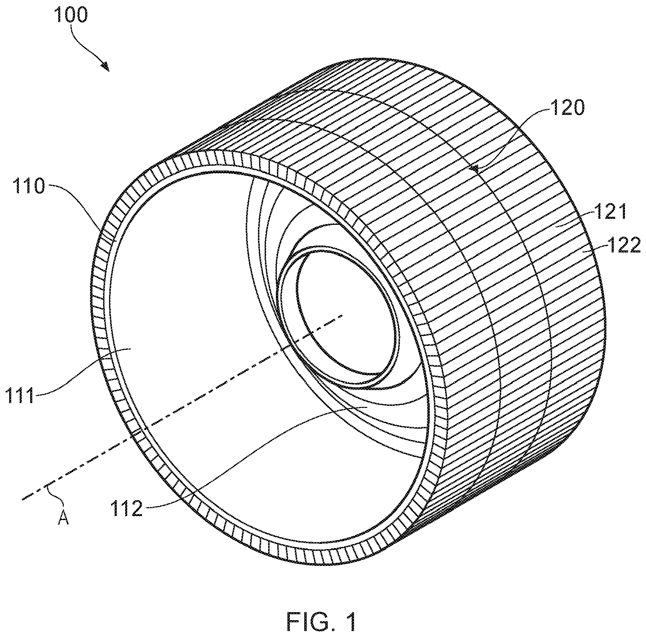

Figure 1 illustrates a perspective view of a rotor 100 according to a first embodiment of the present invention. The rotor 100 comprises a structural member 110 which may comprise a ferromagnetic material. The rotor 100 further comprises an array 120 of permanent magnets disposed around a rotational axis A of the rotor 100. The structural member 110 of the rotor 100 may be a cylindrical shaft, preferably a hollow shaft, arranged to rotate around the rotational axis A. The structural member 110 may have a substantially annular cross section. The structural member 110 may comprise a ferromagnetic material, an example of which includes steel. The structural member 110 may comprise or consist of electrical steel, such as silicon steel. The ferromagnetic material may be continuous in the axial, radial and/or hoop directions of the structural member 110. The structural member 110 may comprise a laminated component, comprising alternating layers of steel and an electrically insulating material. Laminations may be positioned in a plane perpendicular to the rotational axis A. However, forming the structural component from a solid mass of material such as a ferromagnetic material can provide advantages in structural strength. In some examples, the structural member 110 can comprise or be formed of a non-magnetic material, such as a carbon fibre composite. Alternatively or additionally, the structural member 110 may comprise a layer of ferromagnetic material. The layer of ferromagnetic material may be disposed between the structural member and the array of permanent magnets. The structural member 110 defines a curved support surface 111 extending around a rotational axis A of the rotor on which the array of permanent magnets are mounted. The structural member 110 may be connected to a radially extending flange 112 by which the rotor is mounted to a rotor shaft (not shown). The shaft may either transmit rotational drive to the rotor 100 or receive rotational drive from the rotor 100, depending on whether the rotor 100 is operating within a motor or a generator.

As shown in Figure 1 the array 120 of magnets comprises a plurality of first magnets 121 and a plurality of second magnets 122 which alternate around the circumference of the rotor 100. The first and second magnets 121 and 122 may differ from each other in structure, dimensions, and/or magnetic orientation.

The magnets of the array of permanent magnets 121-122 may comprise any suitable magnetically hard material such as ferrite, alnico and/or rare-earth materials such as neodymium. Each of the magnets comprise a north pole and a south pole. The poles define a north-south plane (not shown) extending longitudinally therebetween. Specifically, the north-south plane defines a plane dividing the north pole from the south pole. The magnets 121, 122 may be placed so as to have alternate north and south polarities around the angular extent of the rotor 100. The north-south planes of the plurality of first magnets 121 may be arranged in a first direction. The north-south plane of the plurality of second magnets 121 may be arranged in a second direction. The first direction may be perpendicular to the second direction, for example.

In the illustrated embodiment, the array of magnets 120 is arranged such that the plurality of first magnets 121 alternates with the plurality of second magnets 122 in the circumferential direction in order to form a Halbach array. It will be understood by the person skilled in the art that it is not essential for the array of magnets 120 to be arranged in this specific manner. For example, the magnets may be arranged in any suitable array which enhances the magnetic field in one radial direction. Thus, the embodiment could equally depict a Halbach-type array which is configured to yield a comparable magnetic field.

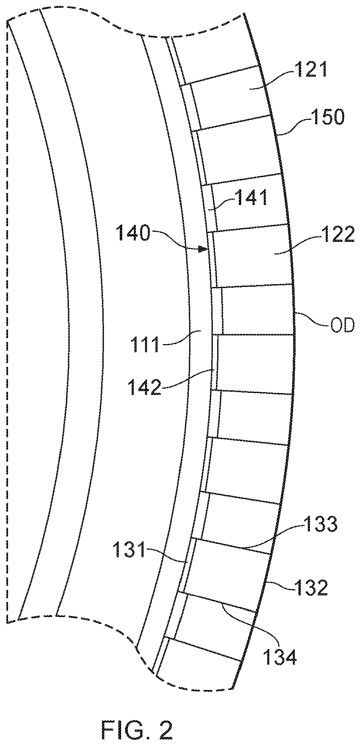

Figure 2 shows an enlarged sectional view of part of the rotor 100 shown in Figure 1. Each of the magnets 121, 122 shown in Figure 2 comprises a radially inner end face 131, a radially outer end face 132, a first circumferential face 133 and a second circumferential face 134. Each face 131-134 of each of the array of magnets is substantially flat in the embodiment depicted. It will be appreciated that one or more of the array of magnets 120 may comprise a curved radial end face. Preferably, the radially inner end face 131 is flat. In some embodiments, only some portion of the array of magnets 120 may comprise one or more flat radial end faces. For example, one tenth, preferably at least one eighth, preferably at least one sixth, preferably at least one quarter, preferably at least one half, preferably at least three quarters, preferably at least seven eighths or more of the array of magnets 120 may have a flat radial end face. In the most preferable arrangements, each of the array of magnets 120 comprises flat faces.

The rotor 100 further comprises a plurality of spacers 140. The plurality of spacers 140 are disposed between the curved support surface 111 and a radially inner end face 131 of each of the plurality of magnets. In this way, the plurality of spacers 140 space the plurality of magnets 120 from the curved support surface 111 in a radial direction. The plurality of spacers 140 may comprise a plurality of first spacers 141, each adjacent to a radially inner end face 131 of one of the plurality of first magnets 121 and a plurality of second spacers 142, each adjacent to an end face of one of the plurality of second magnets 122. The spacers 140 may indirectly contact one or both of the curved support surface 111 and its respective magnet via one or more intermediate components (not shown). In the illustrated embodiment, each spacer 140 is contiguous with a radially inner end face 131 of a single one of the array of magnets 120 and with the curved support surface 111.

The plurality of spacers 140 are configured to modify the outer diameter OD defined by the array 120 of magnets. When implementing specific magnet arrays, such as a Halbach array, differing orientations of the north-south plane of a plurality of magnets may impact the optimal size of the magnets. Thus, in some embodiments, the plurality of first magnets 121 may be formed to comprise different dimensions to the plurality of second magnets 122. In the illustrated embodiment, the plurality of first magnets 121 are smaller in the radial direction than the plurality of second magnets 122. It will be understood that, alternatively, the plurality of first magnets 121 may be larger in the radial direction than the plurality of second magnets 122. Optionally, there may be further pluralities of magnets defining further radial extents.

To compensate for the differing sizes of the first and second magnets, the first spacers 141 differ in size to the second spacers 142. In Figure 2, the first spacers are larger in the radial direction than the second spacers 142. By configuring the first and second spacers such that the difference in radial size between the first and second spacers is similar to the difference in radial size between the first and second magnets, variations in the outer diameter OD of the array of magnets 120 can be minimised. Preferably, the first and second spacers are sized such that the difference in radial size between the first and second spacers is substantially the same as the difference in radial size between the first and second magnets and the outer diameter of the array of magnets 120 is substantially constant. This minimises variations in the air gap of the assembled electrical machine (not shown) which might otherwise result from using two sets of magnets with different radial sizes also have different radial extents to each other. As shown in Figure 2, the rotor 100 may further comprise a composite sleeve 150 which extends around the outer diameter of the array of magnets 120 to help retain the magnets in place during rotation of the rotor 100.

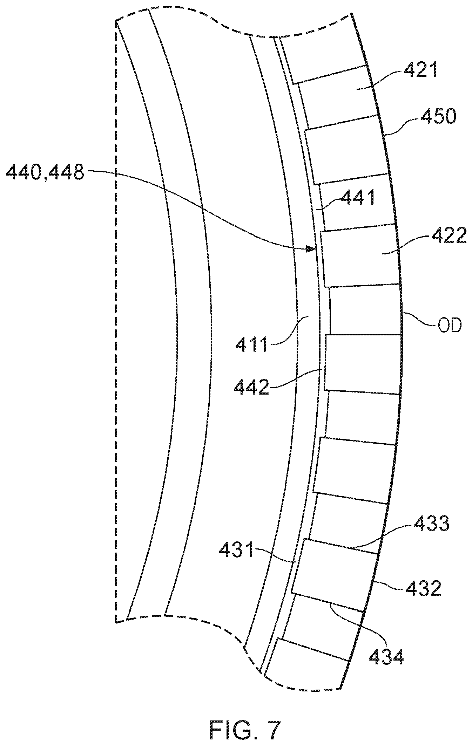

The plurality of spacers 141, 142 may be formed from a continuous annulus of material extending around the entire circumference of the structural member 110. The plurality of spacers 141, 142 may be formed from one or more sheets of material which are wrapped around the circumference of the structural member (see Figure 7). In the rotor 100 of the first embodiment, the plurality of spacers 141, 142 are formed from a plurality of discrete segments, or spacer strips, which form a discontinuous array of spacer elements around the rotational axis A of the rotor 110. The discontinuity between adjacent spacer strips may be aligned with the discontinuity between adjacent magnets. Adjacent magnets and/or spacer strips may abut each other or be separated by an optional gap. In the embodiment illustrated, each spacer strip is associated with a single one of the plurality of magnets 121, 122. That is, a single spacer strip is adjacent to the inner radial end face 131 of a single magnet 120. It will be understood that, while this may be the configuration for one or more magnets 120 and one or more associated spacers 140, this feature is not essential. For example, each spacer strip may be associated with multiple magnets.

The intermediate layer formed by the spacers 141-142 may have a thickness of between 0.1 and 10 mm, preferably between 0.5 to 5 mm, more preferably between 1 and 3 mm. Such a thickness may be a mean thickness averaged around the intermediate layer. Such a thickness may be measured in the radial direction relative to the rotational axis A. Each of the spacers 141-142 may comprise a plurality of sublayers. The optional sublayers may be stacked on top of one another in a radial direction. The cumulative thickness of the optional sublayers may fall within one of the aforementioned ranges.

Preferably, the plurality spacers 140 extend along substantially the entire axial extent of the array of magnets 120.

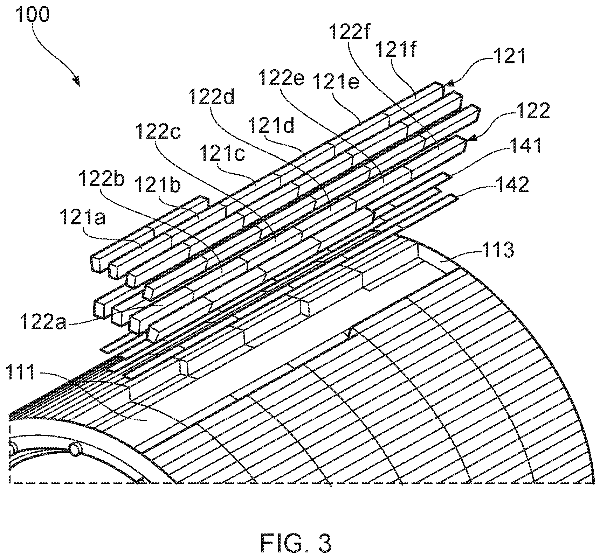

Referring to Figure 3, the array of magnets 120 extends in the axial direction of the rotor 100. That is, the array of magnets 120 extends parallel to the rotational axis A of the rotor 100. Each magnet in the array may be a single structure extending along the full axial extent of the array. Alternatively, one or more magnets in the array may be formed from a plurality of axial sections which are positioned end-to-end in the axial direction. In Figure 3, each first magnet 121 in the array is formed from six axial segments 121a-121f and each second magnet in the array is formed from six axial segments 122a-122f. It will be appreciated that one or more of the magnets may comprise fewer, or otherwise more, axial segments. The rotor 100 shown in Figure 1 is a high-pole count rotor, in which the array has more than 30, 40 or 50 permanent magnets. It will be appreciated that this disclosure may extend to a rotor having a different number of permanent magnets to thereby provide a rotor with a different number of poles. In a similar manner, one or more of the plurality of spacers may be a single structure extending along the full axial extent of the array. Alternatively, one or more spacers may be formed from a plurality of axial sections which are positioned end-to-end in the axial direction. In Figure 3, each first spacer 141 is formed from six axial segments and each second spacer is formed from six axial segments. It will be appreciated that one or more of the spacers may comprise fewer, or otherwise more, axial segments. In this manner, each magnet section can be fixed to its associated spacer section prior to assembly on the rotor 100 and can thereby be protected by its associated spacer section during handling.

The spacers 141 and 142 may directly abut the structural member 110, or may be fixed to the structural member 110 via a retaining layer (not shown) which may comprise an adhesive. Similarly, at least one of the permanent magnets 121-122 may directly abut the spacers 141 and 142, or may be fixed to the spacers 141-142 via a retaining layer (not shown) which may comprise an adhesive. There may be a rotor sleeve 150 disposed around the rotor 100, preferably around the plurality of permanent magnets 121-122, to secure the components of the rotor 100. The plurality of spacers 140 may be formed by moulding. For example, the plurality of spacers 140 may be formed by injection moulding. The plurality of spacers 140 may otherwise be formed by rotational moulding, thermoforming, or any other appropriate form of moulding or additive manufacturing. Alternatively, the plurality of spacers 140 may be extruded. This is especially efficient when forming several spacers 140 of congruent geometry. It will be appreciated that, when forming two or more pluralities of spacers 140 by extrusion, a corresponding plurality of dies with differing cross-sectional profiles is required.

The rotor 100 shown in Figures 1-3 is configured to be arranged concentrically within a stator. In the illustrated arrangement, the array of permanent magnets 121-122 is located radially outward of the structural member 110. In this manner, the rotor 100 is configured to rotate concentrically within a stator (not shown). It will be understood that the teachings may equally apply to a rotor of an out-runner configuration, in which the rotor rotates around a stator positioned radially inward of the rotor. In this alternative arrangement, the array of permanent magnets and the spacers 141-142 may be positioned radially inward of the structural member 110.

The rotor 100 may further comprise a radially extending end cap 113 fixed at one or both axial ends of the structural member. The end cap 113 may be ringshaped. The end cap 113 helps to retain the magnets and spacers in the axial direction during assembly and operation.

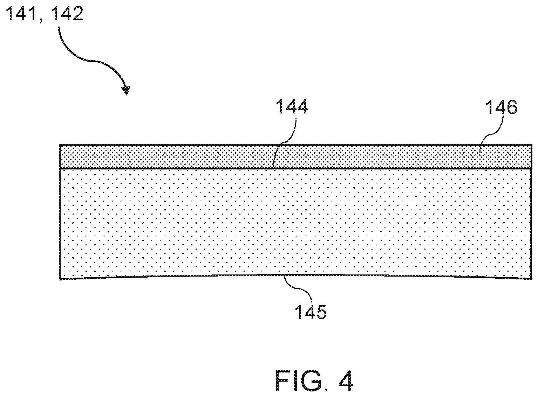

Figure 4 is a schematic lateral sectional view of a spacer 141, 142 of the rotor 100 taken through a radial plane. The spacer has an upper (radially outer) surface 144 which is shaped to correspond to the geometry of the radially inner end face of the magnet with which it is used. In the illustrated embodiment, the upper surface 144 is flat. It will be understood that the upper surface 144 may have any appropriate geometry such as concave, convex, bevelled, recessed, or tapered. The spacer 141, 142 also has a lower (radially inner) surface 145 which is shaped to conform to the curved support surface. Providing the lower surface 145 with the same radius of curvature as the curved support surface is an especially advantageous feature when used in conjunction with magnets comprising a flat radial end face which otherwise would not conform to the shape of the support surface without further machining steps being undertaken.

The spacer 141, 142 also comprises an optional soft magnetic element 146. As shown in Figure 4, the soft magnetic element 146 may be fixed to the upper surface 144 of the spacer 141, 142. This may be achieved by adhesive, fastening, or any other suitable means of fixing. The soft magnetic element 146 can favourably alter the flux characteristics of the rotor. With the soft magnet element 146 fixed to the upper surface 144 of the spacer 141, 142, the soft magnetic element 146 is positioned adjacent to a magnet 121, 122, in use. That is, the soft magnetic element 146 may be at least partially contiguous with a magnet 121, 122. Alternatively, the soft magnetic element 146 may be embedded within the body of the spacer 142. For example, where the spacer is injection moulded, the soft magnetic element 146 may be a soft magnetic sheet which is embedded within the spacer by over-moulding. The spacer may comprise a soft magnetic composite material. A soft magnetic composite material is commonly referred to using the acronym 'SMC'. A SMC material comprises soft magnetic particles. The particles may comprise a ferromagnetic material, such as iron. The SMC may originate from a powder. The spacer may be formed using a powder metallurgical process. The average particle size in such powders may range from 5 to 200 µm. The average particle size may advantageously be less than 200 µm, less than 150 µm, less than 100 µm, less than 75 µm, or less than 50 µm. A smaller particle size is preferable in reducing the extent of any in-particle eddy currents that may be induced. The particles of the powder may be at least partially coated in an electrically insulating material. This can be achieved by the particles being mixed or interspersed in an electrically insulating material. In this way, electrically and magnetically conductive particles in the SMC may be electrically insulated from at least some adjacent electrically and magnetically conductive particles by virtue of a layer or partial layer of electrical insulation. A soft magnetic composite material can be contrasted with a laminated component that has alternating macroscopic layers of, for example, steel and an electrically insulating resin. In a soft magnetic composite material, the maximum dimension along which electrical current can flow may be limited by the particle size. Unlike a ferromagnetic layer of a laminated component, the particles in a soft magnetic composite may be non-contiguous. Furthermore, the magnetic and electrical properties of a soft magnetic composite may be isotropic, meaning that such physical properties are similar when measured in different directions; this is in contrast to a laminated component which is anisotropic such that its physical properties depend on the direction in which they are measured. In a laminate a single layer of electrically and magnetically conductive material may extend over significant distances in a single plane, cylinder or linear direction. Electrically and magnetically conductive particles in a SMC will generally have a maximum overall dimension of less than a centimetre, or less than a millimetre, and may have a maximum overall dimension smaller than that, such as the sizes described above.

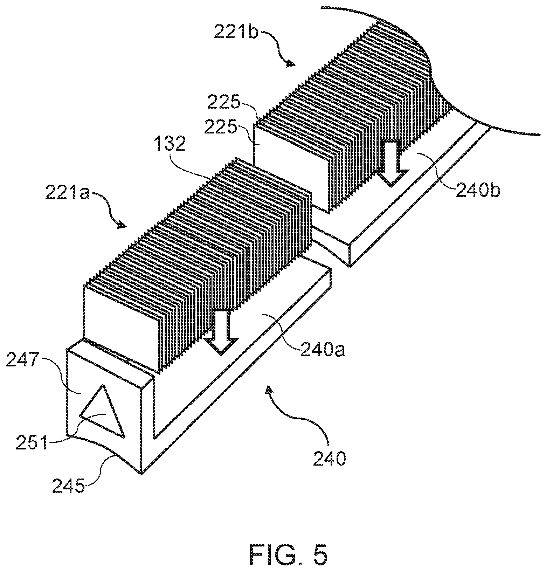

Figure 5 is an exploded perspective view of part of an alternative embodiment of spacer 240, showing two spacer sections 240a, 240b and two magnet sections 221a, 221b. The spacer 240 comprises a lower (radially inner) surface 245 which is shaped to conform to the curved support surface. Thus, the lower surface 245 may be contoured, or comprise a contoured surface. In Figure 5, the lower surface 245 comprises a concave surface. In this embodiment, each magnet section is formed from a stack of laminate sheets 225 arranged on one of the spacer sections. The laminate sheets are shown as being stacked axially. In other embodiments the laminate sheets may be stacked radially, or circumferentially. In this embodiment, the spacer 240 has a radially extending projection 247 arranged at an axial end of the magnet. The radially extending projection forms an end cap at an axial end of the array and can negate the need for separate end caps (as shown in Figure 3). Further, during assembly and handling, the projection 247 forms a protective layer on the end of the magnet to reduce the risk of damage. One or more of the spacers may comprise one or more visible indicia 251 by which the different types of spacer can be easily identified. The visual indicia 251 may include, but is not limited to, text or graphics indicating the type of spacer. In the embodiment of Figure 5, the visual indicium 251 is a graphic which indicates the direction of the north-south plane of the magnet.

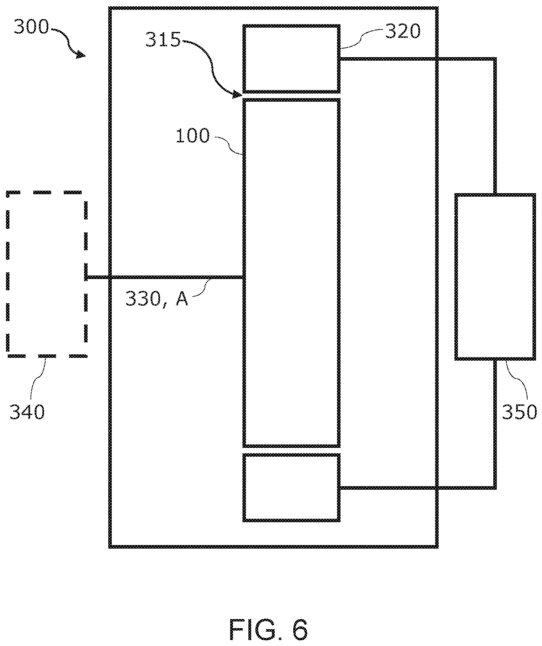

Figure 6 shows a schematic illustration of an electrical machine 300 which incorporates the rotor of the present disclosure. The electrical machine 300 comprises the rotor 100 and a stator 320 relative to which the rotor 100 may rotate about the rotational axis A. In the illustrated arrangement, the stator 320 comprises a stator core, arranged around the rotational axis A and comprising a plurality of slots, defined by a plurality of stator teeth, having stator windings arranged therein. The stator 320 is typically configured as an annular member comprising a bore within which the rotor 100 is rotatably mounted. The rotor 100 is generally mounted on a shaft 330 arranged to rotate about the rotational axis A. An air gap 315 is formed between the rotor 100 and the stator 320 when the rotor 100 and the stator 320 are in an operational position.

Rotation of the rotor 100 relative to the stator 320 can induce an electromotive force in the stator windings as a result of the varying magnetic field that they experience from the rotating array of permanent magnets. In this way, the electrical machine 300 may be employed as an electrical generator. In such configurations, the rotor 100 is generally driven to rotate by a prime mover 340, such as an aircraft engine, via the shaft 330. As the rotor 100 is rotated about the rotational axis A within the bore of stator 320, the magnetic field of the rotor 100 is also rotated. This causes a rotating magnetic field which interacts with the electrical conductors of the stator 320 and thus generates a voltage which may subsequently be supplied to an electrical accessory or component 350.The electrical machine 300 may also be configured to operate as an electrical motor by providing the windings of the stator 320 with electrical current from a power source 350. The electrical current is provided to the windings of the stator, producing a time-varying magnetic field which causes the rotor 100 to rotate. The rotor 100 in turn rotates the shaft 330 and thus may be used to transfer drive to a prime mover 340.

Figure 7 shows an enlarged sectional view of part of a rotor 400 according to a second embodiment. The second embodiment has a similar structure and operation to the first embodiment discussed above and similar reference numerals are used to denote similar features. Thus, each of the magnets 421, 422 shown in Figure 7 comprises a radially inner end face 431, a radially outer end face 432, a first circumferential face 433 and a second circumferential face 434. Each face 431-434 of each of the array of magnets is substantially flat in the embodiment depicted. It will be appreciated that one or more of the array of magnets 420 may comprise a curved radial end face. Preferably, the radially inner end face 431 is flat. In some embodiments, only some portion of the array of magnets 420 may comprise one or more flat radial end faces. For example, one tenth, preferably at least one eighth, preferably at least one sixth, preferably at least one quarter, preferably at least one half, preferably at least three quarters, preferably at least seven eighths or more of the array of magnets 420 may have a flat radial end face. In the most preferable arrangements, each of the array of magnets 420 comprises flat faces.

The rotor further comprises a plurality of spacers 440. The plurality of spacers 440 are disposed between the curved support surface 411 and a radially inner end face 431 of each of the plurality of magnets. In this way, the plurality of spacers 440 space the plurality of magnets 420 from the curved support surface 411 in a radial direction. The plurality of spacers 440 may comprise a plurality of first spacers 441, each adjacent to a radially inner end face 431 of one of the plurality of first magnets 421 and a plurality of second spacers 442, each adjacent to an end face of one of the plurality of second magnets 422. The spacers 440 may indirectly contact one or both of the curved support surface 411 and its respective magnet via one or more intermediate components (not shown). In the illustrated embodiment, each spacer 440 is contiguous with a radially inner end face 431 of a single one of the array of magnets 420 and with the curved support surface 411.

Unlike the first embodiment, the plurality of spacers 440 of the rotor 400 are defined by a unitary structure between the curved support surface 411 and the magnets. In this embodiment, the spacers are defined by a castellated sheet 448 wrapped around the structural member. With this embodiment, it is preferable to fix the castellated sheet 448 to the curved support surface 411 prior to arranging the magnets on the spacers. This may be achieved by applying adhesive to a radially inner surface of the castellated sheet 448, or a radially outward surface of the curved support surface 411, and subsequently wrapping the castellated sheet 448 around the curved support surface 411 in a circumferential direction. The castellated sheet 448 forms an intermediate layer between the magnets and the structural member which spaces the magnets 420 from the curved support surface 411. The castellated sheet 448 may extend around the full circumference of the structural member. In other embodiments, multiple castellated sheets may be arranged around the rotational axis A and combine to form the intermediate layer such that each sheet extends around only part of the circumference of the structural member.

The castellated sheet 448 may directly abut the curved support surface 411, or it may be fixed to the curved support surface 411 via a retaining layer (not shown) which may comprise an adhesive. Similarly, at least one of the permanent magnets may directly abut the castellated sheet 448, or it may be fixed to the castellated sheet 448 via a further retaining layer (not shown) which may comprise an adhesive. The castellated sheet 448 may have a thickness of between 0.1 and 10 mm, preferably between 0.5 to 5 mm, more preferably between 1 and 3 mm. In comprising the spacers 440, the castellated sheet 448 has a thickness which varies circumferentially. The thickness referred to therefore may be a mean thickness averaged around the castellated sheet, a maximum thickness, or a minimum thickness.

The rotor may further comprise a composite sleeve 450 which extends around the outer diameter of the array of magnets 420 to help retain the magnets in place during rotation of the rotor.

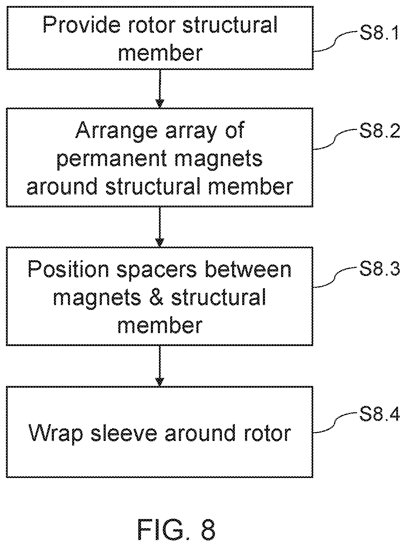

Figure 8 illustrates a method of assembly for a rotor 100 for an electrical machine 300. The method may comprise one or more steps of incorporating any aspect of the rotor described above. The method comprises a step S8.1 of providing a structural member for a rotor. The method further comprises a step S8.2 of arranging a plurality of magnets on a curved support surface of the structural member of the rotor, and a step S8.3 of positioning a plurality of spacers between the curved support surface and the plurality of magnets to space the plurality of magnets from the curved support surface. The step S8.3 may be carried before step S8.2, for example by arranging the plurality of spacers on the curved support surface before subsequently fixing the plurality of magnets to the plurality of spacers. In such methods, the plurality of spacers may be provided on a castellated sheet which is arranged on the curved support surface before the magnets are then arranged on the castellated sheet. Preferably, steps S8.2 and S8.3 are carried out by fixing the plurality of spacers together with the plurality of magnets and arranging both the spacers and the magnets together on the curved support surface of the structural member. The plurality of magnets may be glued onto the plurality of spacers. The plurality of magnets may each be a unitary component. The plurality of magnets may each comprise a plurality of laminate sheets which are stacked and bonded together on one of the plurality of spacers. The sheets may be magnetised to form each magnet before or after fixing to the spacer. The sheets or magnets may be magnetised in situ on the structural member. The method may further comprise a step S8.4 of wrapping a rotor sleeve, such as one made from carbon fibre, around the array of permanent magnets.

The method steps described above are arranged in an exemplary order of performance. However, it is to be understood that the method steps may be performed in a multitude of different orders depending on the requirements. For example, the magnets may be magnetised at any stage. Similarly, the spacers may be installed to the rotor prior to the installation of the magnets. This may be a favourable order when the spacers are defined on a continuous castellated sheet, for example.

## Claims

1. A rotor (100) for an electrical machine (300), the rotor comprising:
a structural member (110) having a curved support surface (111) which extends around a rotational axis (A) of the rotor;
a plurality of magnets disposed on the curved support surface and arranged in an array (120) around the rotational axis of the rotor, the array comprising:
a plurality of first magnets (121) having a first radial size; and
a plurality of second magnets (122) having a second radial size which is greater than the first radial size, wherein the plurality of first magnets and the plurality of second magnets alternate around the rotational axis of the rotor; and
a plurality of spacers (140) disposed between the curved support surface and at least some of the plurality of magnets, wherein the plurality of spacers comprises:
a plurality of first spacers (141) disposed between a radial end face of each of the plurality of first magnets and the curved support surface to space the plurality of first magnets from the curved support surface in a radial direction; and
a plurality of second spacers (142) disposed between the curved support surface and a radial end face of each of the plurality of second magnets to space the plurality of second magnets from the curved support surface in a radial direction,
wherein the plurality of first spacers each have a first radial thickness and the plurality of second spacers each have a second radial thickness which is less than the first radial thickness, wherein each of the plurality of spacers is shaped to conform to both the curved support surface of the structural member and to the radial end face of its associated one of the plurality of magnets, and wherein the radial end face of at least some of the plurality of magnets is flat.

2. The rotor (100) according to claim 1, wherein the plurality of first (141) and second (142) spacers are sized such that the array (120) defined by the plurality of magnets has a substantially uniform outer diameter (OD).

3. The rotor (100) according to any preceding claim, wherein the plurality of spacers (140) are defined by a castellated sheet (448) which extends around the curved support surface (111) in a circumferential direction.

4. The rotor (100) according to claim 1 or claim 2, wherein the plurality of spacers (140) comprises a plurality of discrete spacer strips which form a discontinuous array around the rotational axis (A) of the rotor.

5. The rotor (100) according to claim 4, wherein each of the plurality of discrete spacer strips is connected to only one magnet of the plurality of magnets (120).

6. The rotor (100) according to claim 1 or claim 2, wherein the plurality of first spacers (141) are formed from a first material composition and the plurality of second spacers (142) are formed from a second material composition which is different to the first material composition.

7. The rotor (100) according to any preceding claim, wherein the plurality of spacers (140) extend along the entire axial extent of the plurality of magnets (120).

8. The rotor (100) according to claim 7, wherein the plurality of spacers (140) comprises radially extending projections (247) adjacent to the axial ends of the plurality of magnets (120) to restrain movement of the magnets in the axial direction.

9. The rotor (100) according to any preceding claim, further comprising a plurality of soft magnetic elements (146) embedded in the plurality of spacers (140).

10. The rotor (100) according to any preceding claim, wherein the plurality of spacers (140) are formed from a polymer.

11. The rotor (100) according to any preceding claim, wherein the plurality of magnets (120) are arranged in a Halbach array.

12. An electrical machine (300) for use in a generator of an aircraft, comprising:
a stator (320); and
a rotor (100) according to any of claims 1 to 11.

13. A method for forming a rotor (100) of an electrical machine, comprising the steps of:
providing a structural member having a curved support surface which extends around a rotational axis of the rotor (S8.1);
arranging a plurality of magnets on the curved support surface in an array around the rotational axis of the rotor (S8.2), the array comprising:
a plurality of first magnets having a first radial size; and
a plurality of second magnets having a second radial size which is greater than the first radial size, wherein the plurality of first magnets and the plurality of second magnets alternate around the rotational axis of the rotor; and
positioning a plurality of spacers between the curved support surface and at least some of the plurality of magnets (S8.3) by:
positioning a plurality of first spacers between the curved support surface and a radial end face of the plurality of first magnets to space the plurality of first magnets from the curved support surface in a radial direction; and
positioning a plurality of second spacers between the curved support surface and a radial end face of the plurality of second magnets to space the plurality of second magnets from the curved support surface in a radial direction,
wherein the plurality of first spacers each have a first radial thickness and the plurality of second spacers each have a second radial thickness which is less than the first radial thickness, and
wherein each of the plurality of spacers is shaped to conform to both the curved support surface of the structural member and to the radial end face of its associated one of the plurality of magnets, and wherein the radial end face of at least some of the plurality of magnets is flat.

## Patentansprüche

1. Rotor (100) für eine elektrische Maschine (300), wobei der Rotor Folgendes umfasst:
ein Strukturelement (110), das eine gekrümmte Stützfläche (111) aufweist, die sich um eine Rotationsachse (A) des Rotors erstreckt;
eine Vielzahl von Magneten, die auf der gekrümmten Stützfläche angeordnet ist und in einer Anordnung (120) um die Rotationsachse des Rotors angeordnet ist, wobei die Anordnung Folgendes umfasst:
eine Vielzahl von ersten Magneten (121), die eine erste radiale Größe aufweist; und
eine Vielzahl von zweiten Magneten (122), die eine zweite radiale Größe aufweist, die größer ist als die erste radiale Größe, wobei sich die Vielzahl von ersten Magneten und die Vielzahl von zweiten Magneten um die Rotationsachse des Rotors abwechseln; und
eine Vielzahl von Abstandshaltern (140), die zwischen der gekrümmten Stützfläche und mindestens einigen der Vielzahl von Magneten angeordnet ist, wobei die Vielzahl von Abstandshaltern Folgendes umfasst:
eine Vielzahl von ersten Abstandshaltern (141), die zwischen einer radial Stirnfläche von jedem der Vielzahl von ersten Magneten und der gekrümmten Stützfläche angeordnet ist, um die Vielzahl von ersten Magneten von der gekrümmten Stützfläche in einer radialen Richtung zu beabstanden; und
eine Vielzahl von zweiten Abstandshaltern (142), die zwischen der gekrümmten Stützfläche und einer radialen Stirnfläche von jedem der Vielzahl von zweiten Magneten angeordnet ist, um die Vielzahl von zweiten Magneten von der gekrümmten Stützfläche in einer radialen Richtung zu beabstanden,
wobei die Vielzahl von ersten Abstandshaltern jeweils eine erste radiale Dicke aufweist und die Vielzahl von zweiten Abstandshaltern jeweils eine zweite radiale Dicke aufweist, die geringer ist als die erste radiale Dicke, wobei jeder der Vielzahl von Abstandshaltern so geformt ist, dass er sich sowohl an die gekrümmte Stützfläche des Strukturelements als auch an die radiale Stirnfläche von dessen zugeordnetem einen der Vielzahl von Magneten anpasst, und wobei die radiale Stirnfläche von mindestens einigen der Vielzahl von Magneten flach ist.

2. Rotor (100) nach Anspruch 1, wobei die Vielzahl von ersten (141) und zweiten (142) Abstandshaltern so bemessen ist, dass die durch die Vielzahl von Magneten definierte Anordnung (120) einen im Wesentlichen einheitlichen Außendurchmesser (OD) aufweist.

3. Rotor (100) nach einem vorstehenden Anspruch, wobei die Vielzahl von Abstandshaltern (140) durch ein verzahntes Blech (448) definiert ist, das sich um die gekrümmte Stützfläche (111) in einer Umfangsrichtung erstreckt.

4. Rotor (100) nach Anspruch 1 oder Anspruch 2, wobei die Vielzahl von Abstandshaltern (140) eine Vielzahl von diskreten Abstandshalterstreifen umfasst, die eine nicht zusammenhängende Anordnung um die Rotationsachse (A) des Rotors bilden.

5. Rotor (100) nach Anspruch 4, wobei jeder der Vielzahl von diskreten Abstandshalterstreifen mit nur einem Magnet der Vielzahl von Magneten (120) verbunden ist.

6. Rotor (100) nach Anspruch 1 oder Anspruch 2, wobei die Vielzahl von ersten Abstandshaltern (141) aus einer ersten Materialzusammensetzung gebildet ist und die Vielzahl von zweiten Abstandshaltern (142) aus einer zweiten Materialzusammensetzung gebildet ist, die von der ersten Materialzusammensetzung unterschiedlich ist.

7. Rotor (100) nach einem vorstehenden Anspruch, wobei sich die Vielzahl von Abstandshaltern (140) entlang der gesamten axialen Ausdehnung der Vielzahl von Magneten (120) erstreckt.

8. Rotor (100) nach Anspruch 7, wobei die Vielzahl von Abstandshaltern (140) sich radial erstreckende Projektionen (247) angrenzend zu den axialen Enden der Vielzahl von Magneten (120) umfasst, um Bewegung der Magnete in der axialen Richtung einzuschränken.

9. Rotor (100) nach einem vorstehenden Anspruch, weiter umfassend eine Vielzahl von weichmagnetischen Elementen (146), die in die Vielzahl von Abstandshaltern (140) eingebettet sind.

10. Rotor (100) nach einem vorstehenden Anspruch, wobei die Vielzahl von Abstandshaltern (140) aus einem Polymer gebildet ist.

11. Rotor (100) nach einem vorstehenden Anspruch, wobei die Vielzahl von Magneten (120) in einer Halbach-Anordnung angeordnet ist.

12. Elektrische Maschine (300) zur Verwendung in einem Generator eines Luftfahrzeugs, umfassend:
einen Stator (320); und
einen Rotor (100) nach einem der Ansprüche 1 bis 11.

13. Verfahren zum Bilden eines Rotors (100) einer elektrischen Maschine, das die folgenden Schritte umfasst:
Bereitstellen eines Strukturelements, das eine gekrümmte Stützfläche aufweist, die sich um eine Rotationsachse des Rotors (S8.1) erstreckt;
Anordnen einer Vielzahl von Magneten auf der gekrümmten Stützfläche in einer Anordnung um die Rotationsachse des Rotors (S8.2), wobei die Anordnung Folgendes umfasst:
eine Vielzahl von ersten Magneten, die eine erste radiale Größe aufweist; und
eine Vielzahl von zweiten Magneten, die eine zweite radiale Größe aufweist, die größer ist als die erste radiale Größe, wobei sich die Vielzahl von ersten Magneten und die Vielzahl von zweiten Magneten um die Rotationsachse des Rotors abwechseln; und
Positionieren einer Vielzahl von Abstandshaltern zwischen der gekrümmten Stützfläche und mindestens einigen der Vielzahl von Magneten (S8.3) durch:
Positionieren einer Vielzahl von ersten Abstandshaltern zwischen der gekrümmten Stützfläche und einer radialen Stirnfläche der Vielzahl von ersten Magneten, um die Vielzahl von ersten Magneten von der gekrümmten Stützfläche in einer radialen Richtung zu beabstanden; und
Positionieren einer Vielzahl von zweiten Abstandshaltern zwischen der gekrümmten Stützfläche und einer radialen Stirnfläche der Vielzahl von zweiten Magneten, um die Vielzahl von zweiten Magneten von der gekrümmten Stützfläche in einer radialen Richtung zu beabstanden,
wobei die Vielzahl von ersten Abstandshaltern jeweils eine erste radiale Dicke aufweist und die Vielzahl von zweiten Abstandshaltern jeweils eine zweite radiale Dicke aufweist, die geringer ist als die erste radiale Dicke, und
wobei jeder der Vielzahl von Abstandshaltern so geformt ist, dass er sich sowohl an die gekrümmte Stützfläche des Strukturelements als auch an die radiale Stirnfläche von dessen zugeordnetem einen der Vielzahl von Magneten anpasst, und wobei die radiale Stirnfläche von mindestens einigen der Vielzahl von Magneten flach ist.

## Revendications

1. Rotor (100) pour une machine électrique (300), le rotor comprenant :
un élément structurel (110) présentant une surface de support incurvée (111) qui s'étend autour d'un axe de rotation (A) du rotor ;
une pluralité d'aimants disposés sur la surface de support incurvée et agencés en un réseau (120) autour de l'axe de rotation du rotor, le réseau comprenant :
une pluralité de premiers aimants (121) présentant une première dimension radiale ; et
une pluralité de seconds aimants (122) présentant une seconde dimension radiale qui est supérieure à la première dimension radiale, dans lequel la pluralité de premiers aimants et la pluralité de seconds aimants alternent autour de l'axe de rotation du rotor ; et
une pluralité d'entretoises (140) disposées entre la surface de support incurvée et au moins certains aimants parmi la pluralité d'aimants, dans lequel la pluralité d'entretoises comprend :
une pluralité de premières entretoises (141) disposées entre une face d'extrémité radiale de chaque aimant parmi la pluralité de premiers aimants et la surface de support incurvée afin d'espacer la pluralité de premiers aimants par rapport à la surface de support incurvée dans une direction radiale ; et
une pluralité de secondes entretoises (142) disposées entre la surface de support incurvée et une face d'extrémité radiale de chaque aimant parmi la pluralité de seconds aimants afin d'espacer la pluralité de seconds aimants par rapport à la surface de support incurvée dans une direction radiale,
dans lequel la pluralité de premières entretoises présente pour chacune une première épaisseur radiale et la pluralité de secondes entretoises présente pour chacune une seconde épaisseur radiale qui est inférieure à la première épaisseur radiale, dans lequel chaque entretoise parmi la pluralité d'entretoises est façonnée pour se conformer à la fois à la surface de support incurvée de l'élément structurel et à la face d'extrémité radiale de l'aimant qui lui est associé parmi la pluralité d'aimants, et dans lequel la face d'extrémité radiale d'au moins certains aimants parmi la pluralité d'aimants est plate.

2. Rotor (100) selon la revendication 1, dans lequel la pluralité de premières (141) et de secondes (142) entretoises est dimensionnée de telle sorte que le réseau (120) défini par la pluralité d'aimants présente un diamètre extérieur (OD) sensiblement uniforme.

3. Rotor (100) selon une quelconque revendication précédente, dans lequel la pluralité d'entretoises (140) est définie par une feuille crénelée (448) qui s'étend autour de la surface de support incurvée (111) dans une direction circonférentielle.

4. Rotor (100) selon la revendication 1 ou la revendication 2, dans lequel la pluralité d'entretoises (140) comprend une pluralité de bandes d'entretoise discrètes qui forment un réseau discontinu autour de l'axe de rotation (A) du rotor.

5. Rotor (100) selon la revendication 4, dans lequel chaque bande parmi la pluralité de bandes d'entretoise discrètes est reliée à un seul aimant parmi la pluralité d'aimants (120).

6. Rotor (100) selon la revendication 1 ou la revendication 2, dans lequel la pluralité de premières entretoises (141) est formée à partir d'une première composition de matériau et la pluralité de secondes entretoises (142) est formée à partir d'une seconde composition de matériau qui est différente de la première composition de matériau.

7. Rotor (100) selon une quelconque revendication précédente, dans lequel la pluralité d'entretoises (140) s'étend le long de l'intégralité de l'étendue axiale de la pluralité d'aimants (120).

8. Rotor (100) selon la revendication 7, dans lequel la pluralité d'entretoises (140) comprend des saillies s'étendant radialement (247) de manière adjacente aux extrémités axiales de la pluralité d'aimants (120) afin de limiter le déplacement des aimants dans la direction axiale.

9. Rotor (100) selon une quelconque revendication précédente, comprenant en outre une pluralité d'éléments magnétiques doux (146) noyés dans la pluralité d'entretoises (140).

10. Rotor (100) selon une quelconque revendication précédente, dans lequel la pluralité d'entretoises (140) est formée à partir d'un polymère.

11. Rotor (100) selon une quelconque revendication précédente, dans lequel la pluralité d'aimants (120) est agencée en un réseau de Halbach.

12. Machine électrique (300) destinée à être utilisée dans un générateur d'un aéronef, comprenant :
un stator (320) ; et
un rotor (100) selon une quelconque des revendications 1 à 11.

13. Procédé destiné à former un rotor (100) d'une machine électrique, comprenant les étapes consistant à :
fournir un élément structurel présentant une surface de support incurvée qui s'étend autour d'un axe de rotation du rotor (S8.1) ;
agencer une pluralité d'aimants sur la surface de support incurvée en un réseau autour de l'axe de rotation du rotor (S8.2), le réseau comprenant :
une pluralité de premiers aimants présentant une première dimension radiale ; et
une pluralité de seconds aimants présentant une seconde dimension radiale qui est supérieure à la première dimension radiale, dans lequel la pluralité de premiers aimants et la pluralité de seconds aimants alternent autour de l'axe de rotation du rotor ; et
positionner une pluralité d'entretoises entre la surface de support incurvée et au moins certains aimants parmi la pluralité d'aimants (S8.3) en :
positionnant une pluralité de premières entretoises entre la surface de support incurvée et une face d'extrémité radiale de la pluralité de premiers aimants afin d'espacer la pluralité de premiers aimants par rapport à la surface de support incurvée dans une direction radiale ; et
positionnant une pluralité de secondes entretoises entre la surface de support incurvée et une face d'extrémité radiale de la pluralité de seconds aimants afin d'espacer la pluralité de seconds aimants par rapport à la surface de support incurvée dans une direction radiale,
dans lequel la pluralité de premières entretoises présente pour chaque entretoise une première épaisseur radiale et la pluralité de secondes entretoises présente pour chaque entretoise une seconde épaisseur radiale qui est inférieure à la première épaisseur radiale, et
dans lequel chaque entretoise parmi la pluralité d'entretoises est façonnée pour se conformer à la fois à la surface de support incurvée de l'élément structurel et à la face d'extrémité radiale de l'aimant qui lui est associé parmi la pluralité d'aimants, et dans lequel la face d'extrémité radiale d'au moins certains aimants parmi la pluralité d'aimants est plate.
